(19) Europäisches Patentamt
European Patent Office
Office européen des brevets

(11) **EP 4 539 555 A1**

(12) **EUROPEAN PATENT APPLICATION**

(43) Date of publication:
**16.04.2025 Bulletin 2025/16**

(21) Application number: **23203400.9**

(22) Date of filing: **13.10.2023**

(51) International Patent Classification (IPC):
*H04W 52/02* (2009.01)     *G06N 3/00* (2023.01)
*G06N 3/044* (2023.01)

(52) Cooperative Patent Classification (CPC):
**G06N 3/044; H04W 52/0216; H04W 76/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **SONG, Jian
  Palaiseau (FR)**
• **PARIS, Stefano
  Vanves (FR)**
• **MARCANO, Andrea
  Antony (FR)**
• **FEKI, Afef
  Sceaux (FR)**

(74) Representative: **Nokia EPO representatives
Nokia Technologies Oy
Karakaari 7
02610 Espoo (FI)**

(54) **METHODS AND APPARATUSES FOR DRX CYCLE CONFIGURATION**

(57)     A RL agent performs a RL process to configure at least one Discontinuous Reception, DRX, cycle for a User Equipment, UE. An action is selected by the RL agent in an action space. Each action in the action space corresponds to a DRX cycle configuration. The RL agent sends to the UE indication to use the DRX cycle configuration corresponding to the selected action. The RL agent receives state information computed over at least one DRX cycle configured based on a DRX cycle configuration indicated by the RL agent. The RL agent computes a reward on the basis of the state information.

Performing signalling with a UE to agree on at least one of a state space for the state information and an action space for a RL process — 900

Performing signalling with the UE to agree on at least one threshold to be used for computing a power consumption level and a QoS level — 910

A RL process is performed to configure at least one Discontinuous Reception, DRX, cycle for the UE — 920

921
922
923
924
925

**FIG. 9**

EP 4 539 555 A1

**Description**

TECHNICAL FIELD

Various example embodiments relate generally to methods and apparatuses for DRX cycle configuration.

BACKGROUND

The Discontinuous Reception (DRX) cycle is a power-saving mechanism used in cellular networks, particularly in Long-Term Evolution (LTE) and 5G networks. It allows mobile devices to conserve battery power by periodically turning off their radio receivers when they are not actively communicating with the network.

The key benefit of the DRX cycle is power efficiency. By periodically turning off the radio receiver during idle periods, mobile devices can significantly extend their battery life while still remaining reachable by the network when needed. The specific DRX parameters can be configured by the network operator to balance power savings and responsiveness, depending on the use case and network conditions.

When a mobile device is not actively transmitting or receiving data, it enters an idle state. In this state, the device periodically wakes up its radio receiver to check for incoming signals, such as paging messages or incoming calls. This periodic waking up of the radio receiver is controlled by parameters of the DRX cycle.

However it is desirable to design a low complexity and robust mechanism to optimize DRX cycle configuration, for example for XR specific traffic, under QoS requirements and /or to meet a target power saving objective.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: performing a Reinforcement Learning, RL, process to configure at least one Discontinuous Reception, DRX, cycle for a User Equipment, UE; wherein performing the RL process comprises: selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration; sending to the UE indication to use the DRX cycle configuration corresponding to the selected action; receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication; computing, by the RL agent, a reward based on the state information; updating a policy for selecting an action in the action space based on the reward.

At least one set of at least one DRX cycle configuration parameter corresponding to an action in the action space may include at least one of a start offset for the DRX cycle active period and a DRX cycle length.

The power consumption indication may represent a power consumption level determined over the at least one DRX cycle.

The QoS indication may be computed based on Extended Reality, XR, frames received over the at least one DRX cycle.

The QoS indication may be computed based on a ratio of a number of Packet Data Units received within a packet delay budget.

The reward may be computed as a function of at least one of a QoS satisfaction based on the QoS indication and a power consumption penalty based on the power consumption indication.

The reward may be computed as a weighted sum of rewards computed respectively for different types of XR frames received by the UE.

The power consumption indication may be or may be converted to a power consumption level coded on n bits, where n is equal or greater than 1, the method comprising determining a state in a state space based on the power consumption level.

The QoS indication may be or may be converted to a QoS level coded on n bits, where n is equal or greater than 1, the method comprising determining a state in a state space based on the QoS level.

The method may comprise: performing signalling with the UE to agree on at least one of a state space for the state information and an action space.

The method may comprise: performing signalling with the UE to agree on at least one threshold to be used for computing the power consumption level or respectively the QoS level.

According to another aspect, an apparatus comprises means (e.g. processing circuitry) for: performing a Reinforcement Learning, RL, process to configure at least one Discontinuous Reception, DRX, cycle for a User Equipment, UE; wherein performing the RL process comprises: selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration; sending to the UE indication to use the DRX cycle configuration corresponding to the selected action; receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication; computing, by the RL agent, a reward based on the state information; updating a policy for selecting an action in the action space based on the reward.

The apparatus may comprise means (e.g. processing circuitry) for performing one or more or all steps of the method according to the first aspect. The means or processing circuitry may include at least one processor and at least one memory storing instructions that, when executed by the at least one processor, cause the apparatus to perform one or more or all steps of a method according to the first aspect.

According to another aspect, an apparatus comprises at least one processor and at least one memory storing instructions that, when executed by the at least one processor, cause the apparatus to perform: performing a Reinforcement Learning, RL, process to configure at least one Discontinuous Reception, DRX, cycle for a User Equipment, UE; wherein performing the RL process comprises: selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration; sending to the UE indication to use the DRX cycle configuration corresponding to the selected action; receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication; computing, by the RL agent, a reward based on the state information; updating a policy for selecting an action in the action space based on the reward. The instructions, when executed by the at least one processor, may cause the apparatus to perform one or more or all steps of a method according to the first aspect.

According to another aspect, a computer program comprises instructions that, when executed by an apparatus, cause the apparatus to perform: performing a Reinforcement Learning, RL, process to configure at least one Discontinuous Reception, DRX, cycle for a User Equipment, UE; wherein performing the RL process comprises: selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration; sending to the UE indication to use the DRX cycle configuration corresponding to the selected action; receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication; computing, by the RL agent, a reward based on the state information; updating a policy for selecting an action in the action space based on the reward. The instructions may cause the apparatus to perform one or more or all steps of a method according to the first aspect.

According to another aspect, a non-transitory computer readable medium comprises program instructions stored thereon for causing an apparatus to perform at least the following: performing a Reinforcement Learning, RL, process to configure at least one Discontinuous Reception, DRX, cycle for a User Equipment, UE; wherein performing the RL process comprises: selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration; sending to the UE indication to use the DRX cycle configuration corresponding to the selected action; receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication; computing, by the RL agent, a reward based on the state information; updating a policy for selecting an action in the action space based on the reward. The program instructions may cause the apparatus to perform one or more or all steps of a method according to the first aspect.

According to a second aspect, a method comprises: receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter; configuring at least one DRX cycle based on the set of at least one DRX cycle configuration parameter, wherein the set of at least one DRX cycle configuration parameter includes a DRX cycle active period duration; sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication.

The set of at least one DRX cycle configuration parameter may include at least one of a start offset for the DRX cycle active period and a DRX cycle length.

According to another aspect, an apparatus comprises means for: receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter; configuring at least one DRX cycle based on the set of at least one DRX cycle configuration parameter, wherein the set of at least one DRX cycle configuration parameter includes a DRX cycle active period duration; sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication.

The apparatus may comprise means for performing one or more or all steps of the method according to the second aspect. The means may include at least one processor and at least one memory storing instructions that, when executed by the at least one processor, cause the apparatus to perform one or more or all steps of a method according to the second aspect. The means may include circuitry (e.g. processing circuitry) to perform one or more or all steps of a method according to the second aspect.

According to another aspect, an apparatus comprises at least one processor and at least one memory storing instructions that, when executed by the at least one processor, cause the apparatus to perform: receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter; configuring at least one DRX cycle based on the set of at least one DRX cycle configuration parameter, wherein the set of at least one DRX cycle configuration parameter includes a DRX cycle active period duration; sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication. The instructions, when executed by the at least one processor, may cause the apparatus to perform one or more or all steps of a method according to the second aspect.

According to another aspect, a computer program comprises instructions that, when executed by an apparatus, cause the apparatus to perform: receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter; configuring at least one DRX cycle based on the set of at least one DRX cycle configuration parameter, wherein the set of at least one DRX cycle configuration parameter includes a DRX cycle active period duration; sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication. The instructions may cause the apparatus to perform one or more or all steps of a method according to the second aspect.

According to another aspect, a non-transitory computer readable medium comprises program instructions stored thereon for causing an apparatus to perform at least the following: receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter; configuring at least one DRX cycle based on the set of at least one DRX cycle configuration parameter, wherein the set of at least one DRX cycle configuration parameter includes a DRX cycle active period duration; sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication. The program instructions may cause the apparatus to perform one or more or all steps of a method according to the second aspect.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a typical traffic pattern of XR video stream according to an example.
FIG. 2 illustrates schematically a RL process using a single RL agent according to an example.
FIG. 3 is a schematic diagram illustrating the computation of state information according to an example.
FIG. 4 is a flowchart illustrating a method for DRX cycle configuration according to an example.
FIG. 5 is a schematic diagram illustrating DRX cycle configuration according to an example.
FIG. 6 is a flowchart illustrating a method for DRX cycle configuration according to an example.

FIG. 7 is a flowchart illustrating a method for DRX cycle configuration according to an example.
FIG. 8 is a flowchart illustrating a method for DRX cycle configuration according to an example.
FIG. 9 is a flowchart illustrating a method for DRX cycle configuration according to an example.
FIG. 10 is a flowchart illustrating a method for DRX cycle configuration according to an example.
FIG. 11 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

## DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments will be described using, as an example of an access architecture to which the exemplary embodiments may be applied, a radio access architecture based on long term evolution advanced (LTE Advanced, LTE-A) or new radio (NR, 5G), without restricting the exemplary embodiments to such an architecture, however. It is obvious for a person skilled in the art that the exemplary embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, the same as E-UTRA), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

The method may be implemented for radio telecommunication systems, including a fifth generation (5G) network or 6G network. Prior or subsequent generations of radio telecommunication systems may be concerned.

5G may enable using multiple input-multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may be expected to have multiple radio interfaces, namely below 6 GHz, cmWave and mmWave, and also being integradable with existing legacy radio access technologies, such as the LTE. Integration with the LTE may be implemented, at least in the early phase, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6 GHz-cmWave, below 6 GHz-cmWave-mmWave). One of the concepts considered to be used in 5G networks may be network slicing in which multiple independent and dedicated virtual sub-networks (network instances) may be created within the same infrastructure to run services that have different requirements on latency, reliability, throughput and mobility.

For LTE and 5G NR, according to the RRC configuration, a DRX cycle consists of an active period (whose duration "drx-onDurationTimer" is noted herein T_ON), during which the radio receiver is turned on and monitors the control channel (namely the PDCCH), and a sleeping period (whose duration "off-duration" is noted T_OFF), during which the UE turns off its circuitry to remains in a low-power state with its receiver turned off and thereby save power. If no scheduling occurs during the active period, the UE goes to sleep at the end of the active period and waits until the end of the DRX cycle to wake up and monitor the control signalling again. If, on the contrary, the UE is scheduled, it remains in the active mode during a configurable period which is controlled by an inactivity timer (whose duration "drx-InactivityTimer" is noted herein T_inact) that the UE (re)starts every time the UE is scheduled, and only switches to sleeping mode when the inactivity timer expires.

This mechanism avoids going into sleeping mode too soon, i.e., while there is still data to be transmitted/received, and increasing the delays. The DRX cycle is configured per UE, and the NW RRC (Network RRC) entity relies on optimization techniques to choose the configuration that better suits the UE's traffic activity at a given time. This means that upon detection of a significant change in traffic activity, it should adjust the DRX cycle configuration accordingly in order to get the most out of this feature in terms of power saving, while avoiding high delays that can compromise the QoS (Quality of Service).

After the inactivity period (T_inact), the UE repeats the DRX cycle by starting a new active period and monitoring for incoming signals.

Extended Reality (XR) refers to all real-and-virtual combined environments and human-machine interactions generated by computer technology and wearables. XR is an umbrella term for different types of realities (see TR 26.918 and TR 26.928):

- Virtual reality (VR) is a rendered version of a delivered visual and audio scene. The rendering is designed to mimic the visual and audio sensory stimuli of the real world as naturally as possible to an observer or user as they move within the limits defined by the application. Virtual reality usually, but not necessarily, requires a user to wear a head mounted display (HMD), to completely replace the user's field of view with a simulated visual component, and to wear headphones, to provide the user with the accompanying audio. Some form of head and motion tracking of the user in VR is usually also necessary to allow the simulated visual and audio components to be updated in order to ensure that, from the user's perspective, items and sound sources remain consistent with the user's movements.
- Augmented reality (AR) is when a user is provided with additional information or artificially generated items or content overlaid upon their current environment. Such additional information or content will usually be visual and/or audible and their observation of their current environment may be direct, with no intermediate sensing, processing and rendering, or indirect, where their perception of their environment is relayed via sensors and may be enhanced or processed.
- Mixed reality (MR) is an advanced form of AR where some virtual elements are inserted into the physical scene with the intent to provide the illusion that these elements are part of the real scene.

The latency requirement of XR traffic in RAN side (i.e., air interface) is modelled as packet delay budget (PDB). The PDB is a limited time budget for a packet to be transmitted over the air from a base station (e.g. gNB) to a UE. For a given packet, the delay of the packet incurred in air interface is measured from the time that the packet arrives at the base station (e.g. gNB) to the time that it is successfully transferred to the UE. If the delay is larger than a given PDB for the packet, then, the packet is said to violate PDB, otherwise the packet is said to be successfully delivered. The value of PDB may vary for different applications and traffic types.

According to traffic modelling of XR applications done by 3GPP working groups SA4 and RAN1, XR traffic shows a quasi-periodic and multimodal bursty pattern with high data rate and typically two burst types that can be classified by their size. The traffic periodicity is due to the 3D video generation process that creates a sequence of frames at a given sampling rate. Typical examples of sampling rates are 30, 60, 90 and 120 frames per second (fps). Compression is achieved through a mix of intra-frame and inter-frame coding. Intra-frame coding uses lossy coding techniques that require only the information carried in the compressed frame for decoding. In contrast, inter-frame coding applies differential techniques on multiple frames to encode and transmit only the differences across consecutive frames. Frames generated using intra-frame coding are called I-frames, while those generated using inter-frame coding are called P-frames or B-frames, depending on the used differential technique. Inter-frame coding achieves higher compression at the cost of creating dependencies across frames. To limit the long dependencies and increase reliability against transmission losses, frames are organized into a Group of Pictures (GoP), namely a sequence of consecutive frames starting with an I-frame followed by a certain number of P-frames and B-frames (note that in XR applications B-frames are usually neglected).

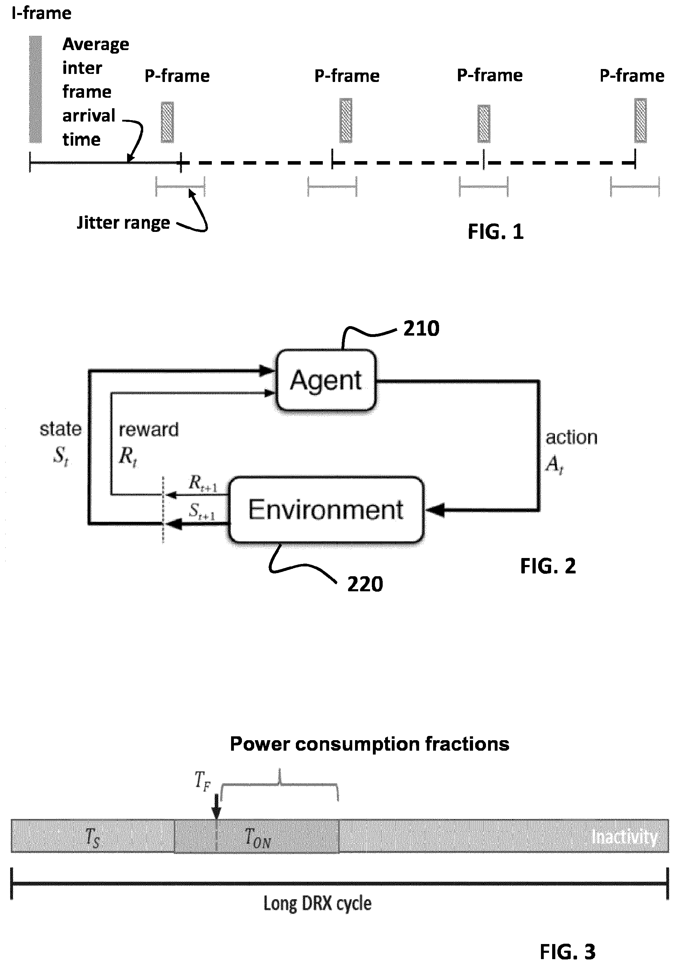

FIG. 1 shows a typical traffic pattern of XR video stream according to an example. Two types of frames (multimodality) are generated at a constant rate by the XR application.

The GoP organization of the 3D video stream creates a bursty traffic pattern with a large burst due to the first I-frame of the GoP followed by a sequence of smaller bursts carrying P-frames as illustrated in FIG. 1.

Current DRX specification allows only a single configuration for the discontinuous reception cycle for all UEs. This results in inefficient configuration of the DRX cycle that hardly fit the XR traffic pattern, resulting in wasted energy due to the different sizes of I-frames and P-frames and potentially in the loss of data due to the non-integer periodicity of the XR traffic. Reconfiguring the DRX cycle according to the XR frame pattern might be a rather slow process, since such change requires RRC signalling/procedures.

The non-integer periodicity of XR traffic results in a lag between the ON periods of the DRX cycle and the XR periodicity. This lag accumulates over time and leads to the desynchronization between the DRX cycle and the XR traffic. This desynchronization can result in the loss of the XR frame, since the PDB is usually smaller than XR traffic periodicity (PDB is equal to 10ms or 15 ms against 16.67ms for XR periodicity at 60 fps).

Also a single DRX cycle configuration does not fit the different sizes of both I-frames and P-frames. P-frames can be 3 to 5 times smaller than I frames. Therefore a configuration of the active period duration T_ON and inactivity period duration T_inact that would be based on I-frames size, would be too long for P-frames. Since P-frames are more frequent than I-frame, a single DRX cycle configuration results in a loss of energy for most of the transmissions.

Also dynamic DRX approach should apply a decision policy at base station for the DRX relevant parameter optimization that works under the varying radio conditions. To ensure the designed decision policy function well, the base station may use UE assistance information that captures both XR QoS requirements and power consumption information.

A fully autonomous method for the base station to perform efficient online optimization of DRX related parameters of XR users to achieve a good QoS performance under varying conditions (e.g. varying mobility patterns, varying radio conditions, traffic conditions, etc) is disclosed.

The RL-based method for DRX cycle configuration disclosed herein provides a specific design/definition of the corresponding state space, actions, rewards, etc, that allow to reach a solid and robust solution.

A DRX cycle configuration method is disclosed that is based on Reinforcement Learning (RL) and allows RL agent at base station to automatically control the adaptation and optimization of XR-specific power saving related parameters.

The RL agent is configured to select an action in an action space. An action in the action space corresponds to a DRX cycle configuration, where a DRX cycle configuration is defined by a set of at least one DRX cycle configuration parameter. A set of at least one DRX cycle configuration parameter that corresponds to an action in the action space includes the active period duration T_ON of the DRX cycle, and may optionally include the start offset T_S or the DRX cycle length $T_{DRX}$ for the configured UE.

The DRX cycle configuration policy may be applied for the optimization of at least one DRX cycle configuration parameter among: the active period duration T_ON of the DRX cycle, and optionally the start offset T_S or the DRX cycle length $T_{DRX}$ for the configured UE.

According to RRC specification in 5G, the start offset T_S is defined by parameter "drx-LongCycleStartOffset" usable for long DRX cycle. This offset value is defined in milliseconds and defined the delay before starting the drx-onDurationTimer.

Additionally, the start of the active period at slot level granularity within a subframe may be configured. The parameter drx-SlotOffset defines the start of the active period with respect to the start of subframe boundary: it defines the subframe where the Long or Short DRX cycle starts.

Reinforcement learning (RL) is an area of machine learning concerned with how intelligent agents ought to take actions in an environment in order to maximize a reward. RL differs from supervised learning in that labelled input/output pairs need not to be collected, and sub-optimal actions need not to be explicitly corrected. Instead the focus is on finding a balance between exploration of action space and exploitation based on acquired knowledge.

Reinforcement learning is based on rewarding desired behaviours and/or applying penalties to undesired ones. In general, a reinforcement learning RL agent is able to perceive and interpret its environment, take actions and learn through trial and error by using an exploration process.

The environment is typically stated in the form of a Markov decision process (MDP). But reinforcement learning algorithms do not assume knowledge of an exact mathematical model of the MDP and they target large MDPs where exact methods become infeasible. For instance, Deep-RL (DRL) is typically modelled so that neural network is used to solve hidden MDP (Markov Decision Process). DRL may be used for large dimensional state / actions. In practice, this typically means that the interactions between the agent and the environment happens with discrete time steps, and each time step results a new state, action and reward.

FIG. 2 illustrates schematically a RL using a single RL agent according to an example.

The RL agent 210 has no a *priori* knowledge of the environment 220 and implements an exploration process on a set of possible actions to acquire such knowledge. When a RL agent 210 starts acting in an environment, the RL agent 210 usually does not have any prior knowledge regarding the task which the RL agent needs to tackle. The RL agent 210 interacts with the environment by taking actions and determining their consequences based on observations. Then RL agent 210 can use these observations to improve its behaviour, as measured by the reward. This reliance on observations that the RL agent gathers by itself differentiates RL agents from agents performing either supervised or unsupervised learning.

The exploration process is an iterative process. During an iteration, at a given time t, the RL agent 210 selects an action $A_t$ to be taken by applying an exploration strategy. Then the RL agent 210 receives state information (i.e. observation) St from the environment 220. A reward $R_t$ is computed for the selected action $A_t$ based on a reward function and the state information. The reward is used to learn a policy for selecting a next action, e.g. with a view to maximise a cumulative reward over time.

In the proposed method, a RL agent configured to determine DRX cycle configuration parameters is implemented at network side, e.g. in a base station.

The RL agent behaviour is based on observations of the environment, an action space, a state space, a reward function and a policy.

A modelling example by using a Q-learning (QL) approach is disclosed herein without a loss of generality. The proposed mechanism, however, can be generalized to any of the RL-based method such as Multi-Arm Bandit (MAB), State-Action-Reward-State-Action (SARSA), and Deep Q-Network (DQN), etc.

The environment as experienced by the RL agent is determined by many factors: by the radio environment (scenario, propagation modelling, mobility, etc), the radio scheduler decisions (time and frequency), etc. These factors determine the UE DL experienced KPIs variation. In the present case, when XR QoS is considered, the RL agent is configured to explore only partly the full RL environment by means of the selected RL observations.

In RL, the observation is state information that the RL agent is gathering from the environment. Here the RL agent uses a set of observation parameters in order to perform the exploration actions and learn the best RL policy. The observations are defined in terms of QoS satisfaction and power consumption such that a QoS satisfaction measure (also referred to as the QoS metric) and a power consumption measure (also referred to as the power consumption metric) are computed over at least one DRX cycle.

The QoS metric may be a XR-specific QoS metric, i.e. a QoS metric computed specifically for XR frames. These QoS metric and power consumption metric may be obtained based on various type of metrics (e.g. Key Performance Indicators, KPIs), including for example user centric metric(s), network centric metric(s) or other types of metrics.

Example XR-specific 3GPP KPIs that could be considered to measure QoS satisfaction and power consumption.

A first metric is a joint user-centric metric defined for capacity and latency constraints. XR use cases are delay sensitive: receiving a packet late has almost the same effect as losing the packet completely. So, the metric adds all the late packets to the packet error rate (PER). The first metric KPI1 is user centric KPI that measures XR UE satisfaction in term of QoS. An XR UE is declared satisfied for example if more than X% of application layer packets are successfully transmitted within a given PDB. Multiple values of the threshold X can be considered, while the baseline is 99%.

A second metric KPI2 is a network centric KPI that measures XR capacity. XR capacity is defined as the maximum number of XR UEs per cell with at least Y% of these UEs being satisfied. The value Y < 100% is used to filter out outliers in the simulations, namely unfortunate deployments with blind spots. In 3GPP RAN1 the threshold Y is 90%.

Besides XR capacity, battery life is another important criterion determining the potential of cellular-connected XR devices. As the absolute power consumption value varies a lot among device vendors, only metrics based on relative power consumption may be used efficiently.

A third metric KPI3 defines the UE power saving gain versus "Always ON". UE power saving gain presents a ratio between the average power consumption when employing a certain power saving technique and the average power consumption when the UE continuously monitors control channels and is always available for base station scheduling.

According to a modelling example of the RL algorithm, the action space defines a set of candidate DRX cycle configurations that may be applied. Each candidate DRX cycle configuration corresponds to a set of at least one DRX cycle configuration parameter. A DRX cycle configuration may include a start offset $T_S$ and an active period duration $T_{ON}$ for a DRX cycle. Alternatively a DRX cycle configuration may include an active period duration $T_{ON}$ and a DRX cycle length $T_{DRX}$.

For instance, a 2D action space may be defined where one dimension corresponds to the start offset $T_S$, the other dimension corresponds to active period duration $T_{ON}$. Given the lower bounds and upper bounds for these two parameters, i.e., $T_S \epsilon \left[ T_S^{\min}, T_S^{\max} \right], T_{ON} \epsilon \left[ T_{ON}^{\min}, T_{ON}^{\max} \right]$, with granularity $\tau_S$ and $\tau_{ON}$, the action space may be defined as

$$\mathcal{A} = \{a_1, a_2, a_3, \dots\} = \left\{ \left( T_S^{\min}, T_{ON}^{\min} \right), \dots, \left( T_S^{\max}, T_{ON}^{\max} \right) \right\}.$$

Alternatively, the action space may be defined as a set of candidate DRX cycle configurations with different values of active period duration $T_{ON}$ and cycle length $T_{DRX}$. In this example, the action space may be defined by

$$\mathcal{A} = \{a_1, a_2, a_3, \dots\} =$$

$$\left\{ \left( T_{ON}^1, T_{DRX}^1 \right), \left( T_{ON}^2, T_{DRX}^2 \right), \left( T_{ON}^3, T_{DRX}^3 \right), \dots \right\}.$$

The state is the information that describes relevant aspects of the environment that the agent's policy needs to make a decision. According to a modelling example of the RL algorithm, a state usable for DRX cycle configuration is defined by a power consumption indication and a QoS indication.

A two-levels representation may be used for converting the power consumption indication (e.g. a power consumption metric) and the QoS indication (e.g. a QoS metric) received from the UE and / or generated by the base station to a power consumption level and a QoS level respectively, leading to a state space consisting of 4 states. For example compound digits are used to identify the states in the state space. In total, there are 4 state indices, i.e.,

$$\mathcal{S} = \{s_1, s_2, s_3, s_4\} = \{00,\ 01,\ 10,\ 11\}.$$

This representation of the state space can be easily linked to the reward function design and limit the state space to 4 indices only.

The first digit represents the power consumption level with a pre-configure threshold $\vartheta$. In the current DRX cycle configuration problem, the DRX cycle configuration $T_S$, $T_{ON}$, and frame arrival time $T_F$ determine average power consumption level as shown in FIG. 3.

Considering the frame arrival time with respect to the start offset and active period duration, the estimated power consumption metric may be computed as $P_e = \dfrac{T_s(t)+T_{on}(t)-T_F}{T_s(t)+T_{on}(t)}$. Therefore, the first digit may be defined by the power consumption level such that

$$d_2 = \begin{cases} 0\ (\text{low}), P_e < \vartheta \\ 1\ (\text{high}), P_e \geq \vartheta \end{cases}$$

The second digit represents the QoS level.

A QoS level may be computed based on a number of PDUs received within a Packet Delay Budget. Denote the ratio of PDUs received within a Packet Delay Budget (PDB) for a given UE at load $L$: $\gamma_L = \dfrac{\sum_{i=1}^{M} 1_{(D_{L(i)} \leq \text{PDB})}}{M_L}$, where $\gamma_L$ is the QoS metric, $D_{L(i)}$ is the delay of $i$-th PDU for UE at load $L$, $M_L$ is the number of received PDUs by UE at load $L$ /.

$$d_1 = H_L = \begin{cases} 1 & \gamma_L \geq X \\ 0 & \gamma_L < X \end{cases}$$

Therefore, the second digit may be defined by the QoS level , with X% of PDUs that are received within PDB. The load L may represent a traffic load or a cell load, e.g. a number of UE attached to a cell.

The state space may also be extended to $n > 2$ state levels when $n$-digits are used for the power consumption level and the QoS level, where the number of levels used for the power consumption level and the QoS level could be different. In such a case, several thresholds are configured by the base station (e.g. gNB) and sent to the UE to evaluate the power consumption levels, e.g., low, medium, high, and the QoS levels, e.g. low, medium, high, which results in $n > 2$.

The reward function may be a linear weighted sum of a QoS satisfaction $f_H(\gamma_L)$ (i.e. UE happiness) and power consumption penalty $g_H(P_e)$, where the UE happiness increases (respectively decreases) when the QoS level increases (respectively decreases), where the power consumption penalty is negative and increases (respectively decreases) in absolute value when the power consumption level increases (respectively decreases).

For the UE happiness, the sigmoid function $f(x) = \dfrac{1}{1+e^{-x}}$ may be used to generate a UE happiness value within the range of [0,1] where $x$ is computed based on the QoS metric $\gamma_L$. Other functions such as the softmax function can also be applied here.

For example, the QoS metric is an XR UE happiness measure $\gamma_L$. The ratio of PDUs received within Packet Delay Budget (PDB) for a given UE at load $L$ is $\gamma_L = \dfrac{\sum_{i=1}^{M} 1_{(D_{L(i)} \leq \text{PDB})}}{M_L}$ with target threshold $X$, the UE happiness is formulated by $f_Q(\gamma_L) = 1/\{1 + e^{-(\gamma_L - x)}\}$, which means the probability that user is happy tends to be close to 1 if $\gamma_L > X$.

The power consumption penalty $f_P(P_e)$ may be defined by $f_P(Pe) = -P_e$.

The reward function may be computed as a weighted sum of the power consumption penalty and UE happiness:

$$r\{s, a\} = \rho \times f_Q(\gamma_L) + (1 - \rho) \times f_P(P_e) \qquad \text{(Eq1)}$$

where the weight factor $\rho \in [0,1]$ is introduced to control the optimization objective.

In one or more embodiments, the reward may be computed by accounting for at least two different types of XR frames (e.g. I frame, P frame or B frames) to indicate different levels of importance of these frames. For example a weighting factor can be associated to the KPI and/or the reward computed for each type of frame separately before computing a total reward. For example, denote the total reward as $R\{s, a\}$, where $R\{s, a\} = \alpha_1 \times r_P\{s, a\} + \alpha_2 \times r_I\{s, a\}$ where the first term $r_P\{s, a\}$ refers to the reward computed for P frames and second term $r_I\{s, a\}$ refers to the reward computed for I frames. The reward $r_P\{s, a\}$ or $r_I\{s, a\}$ may be computed for example based on equation Eq1 and the metrics reported by the UE for the considered frame type.

To this end, a new signalling for frame tailored KPI reporting may be used: the base station (e.g. gNB) may request the UE to report KPI per frame type. This weighting by levels of importance of the different types of frames may eventually be used only during a limited duration, for example during exploration (or "warm-up") and / or until the RL model has converged.

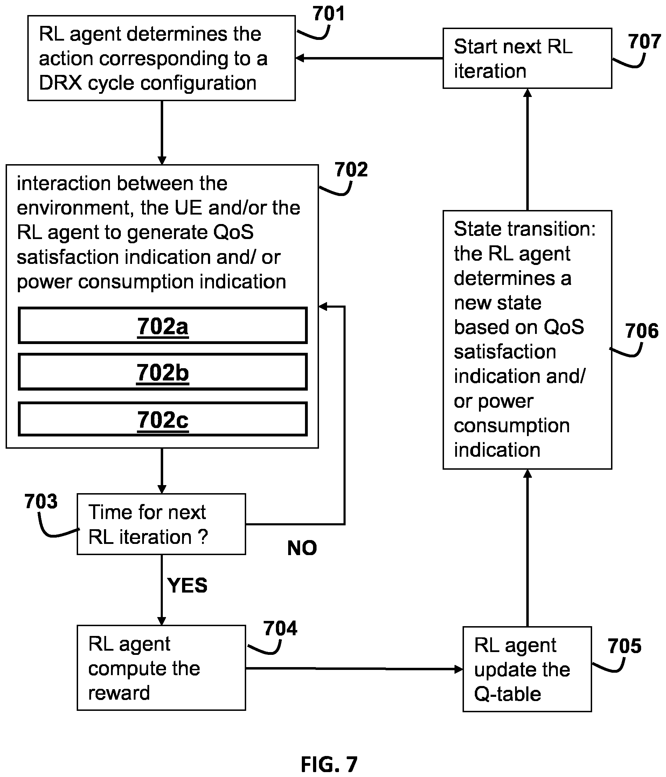

The policy may be implemented using a lookup table (hereafter the Q-table) that is used to store the learned knowledge during the RL exploration and exploitation. Each entry of the Q-table $Q(s, a)$ stores the discounted reward value $Q(s, a)$ for a current state s and action $a$ pair as shown in Step 705 of RL-DRX adaptation algorithm in FIG. 7.

The dimension of Q-table is determined by the size of state and action spaces. By choosing the binary digits for state space modelling, this contributes to reduce the algorithm complexity for final convergence.

The approach can be extended to Deep Q-Learning where a NN is used to approximate the Q-value function. The state is taken as the input, and the Q-value of all possible actions $Q(s, a)$ is generated as the output.

The following steps may be involved in RL when using deep Q-learning networks (DQNs): 1) Past experiences are stored in memory; 2) The maximum output of a prediction DQN determines the next action; 3) The loss function may be defined as the mean square error of the target Q-value $Q^*(s, a)$ and the predicted Q-value $Q(s, a)$., where the target Q-value is computed based on the action selected during exploration by a target DQN, the predicted value is based on the action by a prediction DQN, where the result from the target DQN is treated as the ground truth for the prediction DQN.

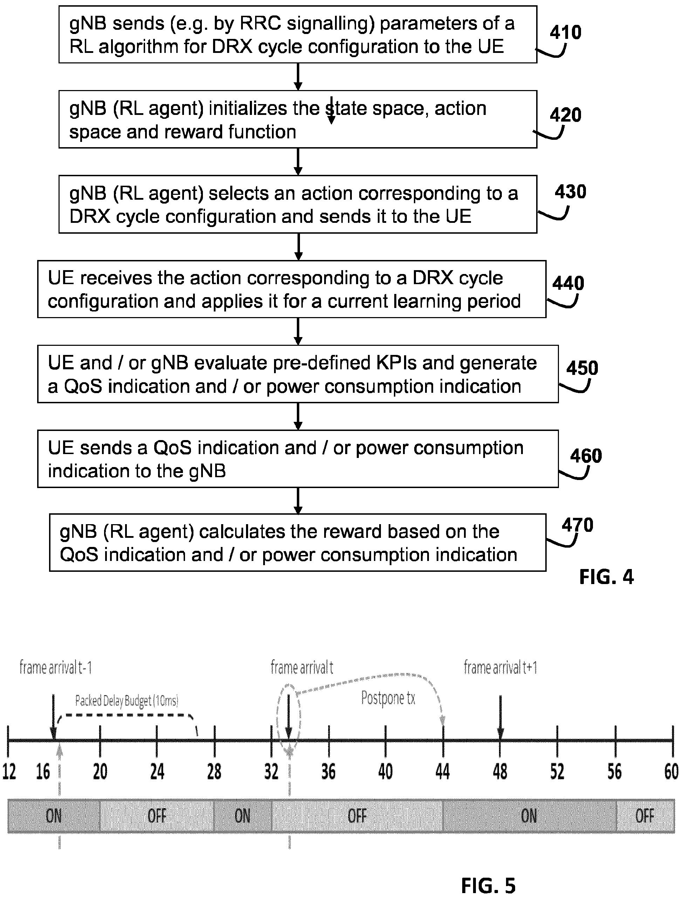

FIG. 4 illustrates a method for DRX cycle configuration using a RL algorithm (i.e. the RL-base modelling framework) implemented between a RL agent in a gNB and a UE in an environment with main parameters of Markov Decision Process (MDP) : state, action, and reward.

In step 410, the gNB sends, by RRC configuration, hyperparameters of the RL algorithm.

In step 420, the RL agent initializes: the state space the action space, the reward function with its parameters and the Q-table entries with its initial values. This may be performed according to any example disclosed herein.

In step 430, the RL agent selects an action in the action space, i.e. one or more DRX cycle configuration parameters, and sends the one or more DRX cycle configuration parameters, to the UE. This may be performed according to any example disclosed herein.

In step 440, the UE receives the one or more DRX cycle configuration parameters and applies these parameters to at least the next DRX cycle. This may be performed according to any example disclosed herein.

In step 450, the UE and / or the gNB may perform measurements to evaluate one or more metrics, e.g. a power consumption metric and/or a QoS metric (e.g. XR-specific QoS metric). This may be performed according to any example disclosed herein.

In step 460, the power consumption and/or metrics generated by the UE are sent to the RL agent.

In step 470, the RL agent computes a reward value based on the received metrics and update the Q-values in the Q-table. This may be performed according to any example disclosed herein.

After step 470, the RL loop starts again at step 430.

Further details and examples are described herein that may be combined.

FIG. 5 illustrates a simplified example of online adaptation for DRX cycle configuration parameters, e.g., active period duration in ms, based on the frame arrival time $T_F$. In this example, we assume that the start offset is fixed.

FIG. 5 shows that when the XR frame arrival time falls within the active period and the packet delay budget, the active period duration may be decreased for a next DRX cycle. On the contrary, when the XR frame arrival time falls within the inactivity period, the active period duration may be increase for a next DRX cycle. Also when the XR frame arrival time is out of the PDB, the frame will be rescheduled for the next transmission in the next DRX cycle and on duration time and this may be taken into account for the adjustment of the current DRX cycle configuration.

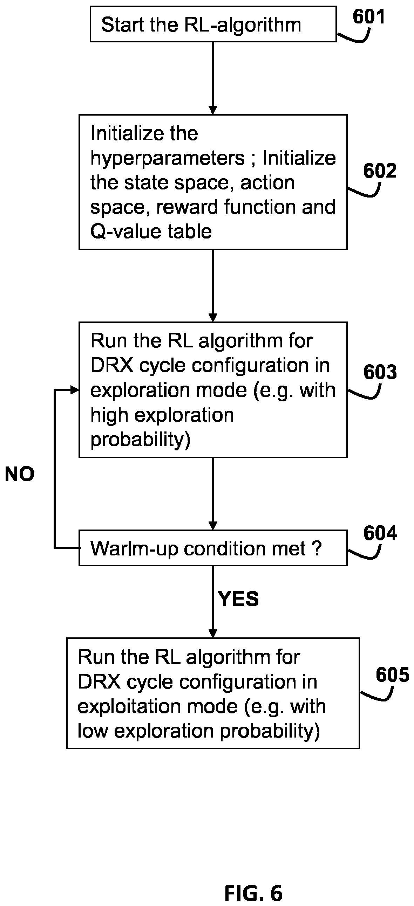

FIG. 6 shows a flowchart of a method for DRX cycle configuration according to one or more example embodiments. The steps of the method may be implemented by a RL agent (e.g. a RL agent in a base station) and UE according to any example described herein.

This example method summarizes steps corresponding to a main control loop for a RL algorithm for DRX cycle configuration to function in two different modes, exploration mode (see step 603) and exploitation mode (see step 605) and shows how transition between the two different modes may be implemented. According to ML language, the exploration mode is also referred to as the training and the exploitation mode is also referred to as the inference.

In step 601 the method starts.

In step 602, the RL agent is initialized with hyper-parameters of the RL algorithm including: the state space the action space, the reward function with its parameters and the Q-table entries with its initial values. Other hyper-parameters parameters of the RL algorithm may include a learning rate, an exploration probability, a reward discounting factor, RL updating period, warm-up time until exploitation phase, etc.

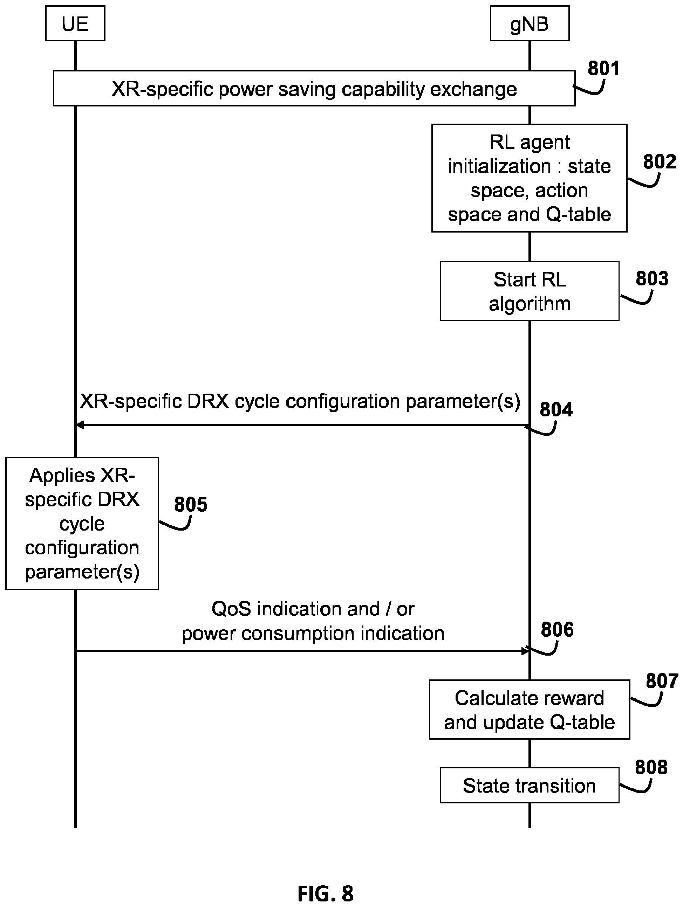

The configuration of the state space and / or action space may be agreed between the RL agent and the UE via a signalling exchange, for example using RRC configuration. This allows to account for UE capability to distinguish between several levels of measure of consumption and / or several levels of QoS satisfaction when reporting state information (i.e. observations) to the RL agent. This aspect is further disclosed by reference to FIG. 8.

Step 603 a RL algorithm for DRX cycle configuration is run in exploration mode. The warm-up/exploration mode allows the RL algorithm to try actions selected in the action space based on an exploration strategy in order to explore the unknow radio environment of UE, compute rewards and store in the Q-table reward Q-values $Q(s, a)$ for each pair consisting of a current state s and a current action $a$.

In this phase, the exploration probability may be selected to be large enough to ensure more random actions taken. This leads to updates of most of the Q-table entries, which then are an improved starting point for the RL algorithm for DRX cycle configuration running in the exploitation mode (see step 605).

In step 604 it is determined whether the warm-up end condition is met. If the condition is met, step 605 is executed after step 604. Otherwise, If the condition is not met, step 603 is executed after step 604.

The warm-up end condition may include one or more of the following conditions:

1) the RL algorithm reaches a pre-defined warm-up termination step;
2) initial Q-values have been replaced by new values in all the entries of the Q-table, meaning that all pairs consisting of a current state s and a current action $a$ have been explored;
3) Temporal Difference (TD) error or loss function value reaches to predefined error margin, etc.

In step 605 the RL algorithm for DRX cycle configuration is run in exploitation mode based on the Q-table obtained after the warm-up end condition has been met.

The exploitation mode allows the RL algorithm to perform more actions from the learned knowledge or past experience that is stored in the Q-table, which corresponds to the desired optimization objective, i.e., maximum reward or minimum cost. In this phase, the exploration probability may be selected to be relatively small to ensure fewer random actions taken.

FIG. 7 shows a flowchart of a method for DRX cycle configuration according to one or more example embodiments. The steps of the method may be implemented by a RL agent (e.g. a RL agent in a base station) and UE according to any example described herein.

This example method discloses steps of the RL algorithm itself that may be used during exploration mode (as disclosed for step 603) and/or exploitation mode (as disclosed for see step 605). Thus steps 701 to 707 may be considered as example sub-steps of step 603 and / or step 605 disclosed by reference to FIG. 6.

In step 701 the RL agent determines at least one action $a(t)$ to be taken for the considered UE.

Depending on the modelling assumptions, the action corresponds to selected DRX cycle configuration parameters to be used by the UE. According to an example RL algorithm using the epsilon greedy policy, the action can be either randomly taken or selected according to the maximum Q-value in the Q-table.

In step 702, interaction between the environment, the UE and/or the RL agent may be performed after the action determination. This step includes sub-steps that may be iteratively executed during a time period referred to as the RL interaction interval.

The step 702 may include sub-steps 702a, 702b and 702c.

In sub-step 702a, the UE receives the action from the RL agent which corresponds to the determined DRX cycle configuration to use by the UE. A DRX cycle configuration may correspond to a given start offset and a given active period duration when the length of the DRX cycle is fixed. Alternatively, a DRX cycle configuration may correspond to a given active period duration and given length of the DRX cycle when the start offset is fixed.

In sub-step 702b, the UE calculates and buffers an estimated power consumption (based on the current DRX cycle configuration) within the current RL interaction interval, and sends a power consumption indication to the RL agent. The power consumption indication is stored by the RL agent. The RL interaction interval may be part of hyperparameters of the RL algorithm. The RL interaction interval may be aligned to RRC reconfiguration interval, like 100-200ms. The RL interaction interval may be fixed. The

In sub-step 702c, the UE calculates and buffers an XR-specific QoS measure within the current RL interaction interval and sends a XR-specific QoS indication to the RL agent. The QoS indication is stored by the RL agent.

Step 703 the RL agent checks whether it is the time for the next RL iteration, i.e. whether the RL interaction interval has expired. If yes, step 704 is executed after step 703. Otherwise step 702 is executed, and the RL agent keep buffering the one or more estimated power consumption indications and the one or more XR-specific QoS indications received from the UE.

In step 704 the RL agent computes the current reward value $R(s(t), a(t))$ based on the one or more power consumption indications and the one or more XR-specific QoS indication(s) received during the current RL interaction interval.

As disclosed herein, based on the KPIs measured by the UE, two independent metrics may be used by the reward function (see for example equation Eq1) for these KPIs:

1) a power consumption penalty corresponding a function $f_P$ applied to the power consumption metric;

2) a QoS satisfaction (also referred to herein as the UE happiness) corresponding a function $f_Q$ applied to the (e.g. XR-specific) QoS measure.

Optionally, other KPIs can also be considered for reward computation. A scalar weighting factor or a weighting vector may be introduced to control the contribution of different considered metrics in the overall optimization objective.

In step 705 the RL agent updates one or more entries of the Q-table for the current state and action pair.

The updating rule used for updating an entry $Q(s(t), a(t))$ in the Q-table may be based on the Bellman equation such that the entry $Q(s(t), a(t))$ is replaced by

$$(1-\alpha)Q\big(s(t),a(t)\big) + \alpha\left\{r\big(s(t),a(t)\big) + \gamma\max_{a\in A}Q\big(s'(t+t_{\text{RL}}),a(t)\big)\right\}$$

where $\alpha$ is the learning rate, $y$ is the discounting factor.

In step 706 a state transition phase is performed based on the determined action at the current time step: a new state (or several new states) is determined based on the one or more power consumption indications and the one or more XR-specific QoS indications received during the current RL interaction interval.

As described above, the new state (i.e. the current state) is determined based on the power consumption level and/or QoS level computed respectively from the power consumption indication and the QoS indication, using the respective configured thresholds.

Step 707 the RL agent moves to the next RL iteration: a new RL interaction interval of duration $T_{\text{RL}}$ is started: step 701 is executed again after step 707.

FIG. 8 shows a flowchart of a method for DRX cycle configuration according to one or more example embodiments. The steps of the method may be implemented by a RL agent (e.g. a RL agent in a base station) and UE according to any example described herein.

This example method discloses aspects of a signalling procedure including message exchange that may be used during exploration mode (as disclosed for step 603) and/or exploitation mode (as disclosed for see step 605). Thus steps 801 to 808 may be considered as example sub-steps of step 603 and / or step 605 disclosed by reference to FIG. 6.

In step 801 the RL agent and UE may send one or more configuration messages to determine XR-specific power saving capability of the UE and/or agree on a hyperparameters of a RL algorithm. RRC-based signalling may be used between the RL agent and the configured UE.

The configuration message may include but not limited to the following key information elements:

- selection of configured XR-specific use case, e.g., the DRX cycle configuration parameters optimization;
- selection of DXR cycle parameters to be optimized: for example either start offset and active period duration, or DRX cycle length and active period duration;

- selection of number of encoding levels (two or more levels) to be used for converting the power consumption metric to a power consumption level and / or the QoS metric to a QoS level;
- thresholds to be used for converting the power consumption metric to a power consumption level and / or the QoS metric to a QoS level;
- selection of the RL algorithm to be performed by the RL agent;
- selection of hyperparameters for the RL algorithm: the state space, the action space, the reward function and the Q-table, etc;

In step 802, the RL agent initializes the RL algorithm based on the parameters selected and / or negotiated with the UE in step 801.

In step 803, the RL agent starts the exploration phase (or respectively the exploitation phase).

In step 804, the RL agent performs an action by selecting a configuration for the DRX cycle, i.e. by selecting values for at least one DXR cycle configuration parameter to be optimized: the selected values are sent to the UE and used for configuring the next DRX cycles for the UE.

In step 805, the UE applies the values received for the DXR cycle configuration parameters to configure its DRX cycles.

In step 806, the UE sends one or more indication messages to the RL agent, an indication message including a power consumption indication and / or a XR-specific QoS indication based on measurements performed by the UE. The indication message may be encoded according to a pre-configured signal format.

The power consumption indication and / or a XR-specific QoS indication may be or may be converted to respectively a power consumption level and a QoS level determined based on the thresholds (see step 801) agreed for the QoS metric and the power consumption metric, using the agreed (see step 801) number of encoding levels.

Based on the indication messages, the RL agent in the base station (e.g. gNB) has concrete knowledge of the impact of each action to the XR-specific QoS and power consumption.

In step 806, a feedback message from base station (e.g. gNB) might be used. This feedback message is optional and may be an acknowledgement message.

In step 807 the RL agent computes the current reward value $R(s(t), a(t))$ based on the received one or more power consumption indication(s) and the one or more XR-specific QoS indication(s). Also the Q-table is updated.

In step 808, the state transition is performed: the RL agent determines the next action to be performed based on the Q-table.

Steps 804 to 808 may be repeated as necessary, e.g. until the exploration phase (or respectively the exploitation phase) is completed.

The various embodiments for DRX cycle configuration disclosed herein provide optimization that aims at improving XR UE QoS with potential power saving gain.

The various embodiments for DRX cycle configuration represent an attractive solution for dynamically configuring the different XR-specific power saving related parameters, i.e., DRX cycle configuration for the UE according to its local radio environment to obtain better performance as compared to traditional methods where the configuration is semistatically configured. The various embodiments for DRX cycle configuration provide a relatively low complexity signalling solution as an indication message to reflect the combination of the optimization objective.

For example, a compact indication (e.g. 2 bits indication) may be exchanged between the base station (e.g. gNB) and UE to explicitly report state information using XR-specific metrics. The indication may be used to determine the state in the state space and compute a reward of the RL-agent algorithm running in the base station (e.g. gNB). The main RL algorithm parameters such as state space, action space, reward function, and policy (Q-table) are designed specifically for using this compact indication.

A 2 bits indication may be used in which:

- the first digit of the indication at UE represents whether a power consumption is high (above a threshold) or not;
- the second digit of the generated indication at UE represents whether a QoS is satisfied (above a threshold) or not.

The indication can be generalized to more than 2 bits to represent n levels of QoS satisfaction and m levels of power consumption.

The DRX cycle configuration methods disclosed herein based on a RL modelling framework is applicable to PDU sets related KPIs.

According to 3GPP document TR 23.700-60, "A PDU Set is composed of one or more PDUs carrying the payload of one unit of information generated at the application level (e.g. a frame or video slice for XRM Services, as used in TR 26.926). In some implementations all PDUs in a PDU Set are needed by the application layer to use the corresponding unit of information. In other implementations, the application layer can still recover parts all or of the information unit, when some PDUs are missing."

With this definition of PDU Set, PDU-Set level QoS KPIs may be introduced:

- PDU Set Delay Budget (PSDB) indicates the delay budget to deliver all PDUs that belong to a PDU Sets;
- Whether all PDUs are needed for the usage of PDU Set by application layer (e.g., if Forward Error Correction techniques are used by the application only K out of N PDUs are needed to decode the PDU set);
- Whether to drop a PDU Set in case PSDB is exceeded (FFS);
- PDU Set Priority (FFS) indicates the priority among PDUs within the same PDU set.

For PDU sets information, the RL modelling may be used. In this sense, for example, the PDU Set Delay Budget (PSDB) may be used to compute a QoS KPI (e.g. a QoS level) and then derive the corresponding state index and reward term that account for XR QoS KPIs. The PSDB may be used to compute XR QoS KPIs used as observations in the RL process.

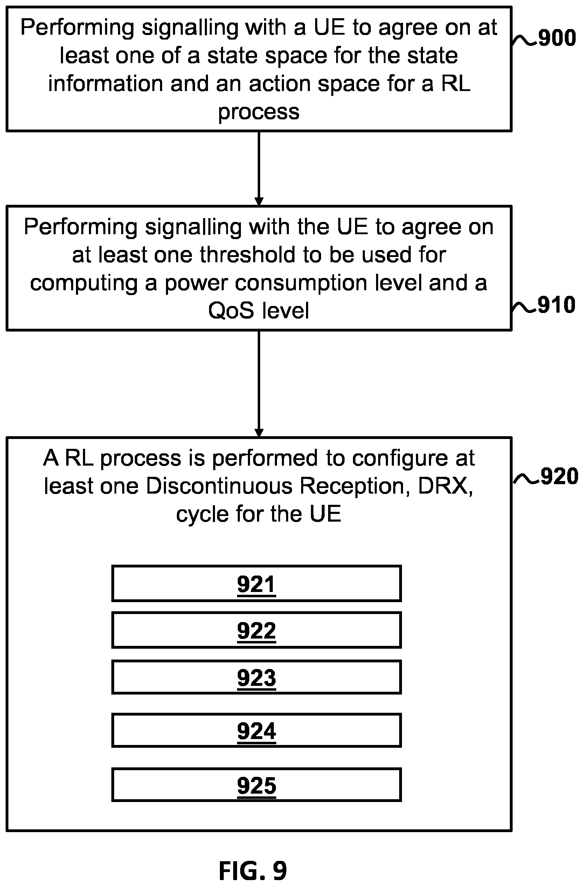

FIG. 9 shows a flowchart of a method for DRX cycle configuration according to one or more example embodiments. The steps of the method may be implemented by a RL agent, e.g. an RL agent in a base station, according to any example described herein.

While the steps are described in a sequential manner, the man skilled in the art will appreciate that some steps may be omitted, combined, performed in different order and / or in parallel.

In step 900, the base station or RL agent may perform signalling with the UE to agree on at least one of a state space for the state information and an action space for a RL process.

In step 910, the base station or RL agent may perform signalling with the UE to agree on at least one threshold to be used for computing a power consumption level and/or a QoS level.

In step 920, the RL process is performed to configure at least one Discontinuous Reception, DRX, cycle for a User Equipment, UE.

The RL process may comprise sub-steps 921-925:

In step 921, the RL agent may select an action in an action space. Each action in the action space corresponds to a DRX cycle configuration defined by a set of at least one DRX cycle configuration parameter.

A set of at least one DRX cycle configuration parameter corresponding to an action in the action space includes a DRX cycle active period duration. A set of at least one DRX cycle configuration parameter corresponding to an action in the action space may include at least one of a start offset for the DRX cycle active period and a DRX cycle length.

In step 922, the RL agent may send to the UE indication to use the DRX cycle configuration corresponding to the selected action.

In step 923, the RL agent may receive from the UE, state information computed over at least one DRX cycle, where each of the at least one DRX cycle is configured based on a DRX cycle configuration indicated by the RL agent.

The state information includes at least one of a power consumption indication and a Quality of Service, QoS, indication.

The power consumption indication may represent a power consumption level determined over the at least one DRX cycle.

The power consumption indication may be or be converted to a power consumption level coded on n bits, where n is equal or greater than 1.

The QoS indication may be computed based on Extended Reality, XR, frames received over the at least one DRX cycle.

The QoS indication may be computed based on a ratio of a number of Packet Data Units received within a packet delay budget.

The QoS indication may be or be converted to a QoS level coded on n bits, where n is equal or greater than 1.

The RL agent may determine a state in a state space based on the power consumption level and / or the QoS level.

In step 924, the RL agent may compute a reward based on the state information.

The reward may be computed as a function of at least one of a QoS satisfaction based on the QoS indication and a power consumption penalty based on the power consumption indication.

The reward may be computed as a weighted sum of rewards computed respectively for different types of XR frames received by the UE.

In step 925, the RL agent may update a policy for selecting an action in the action space based on the reward.

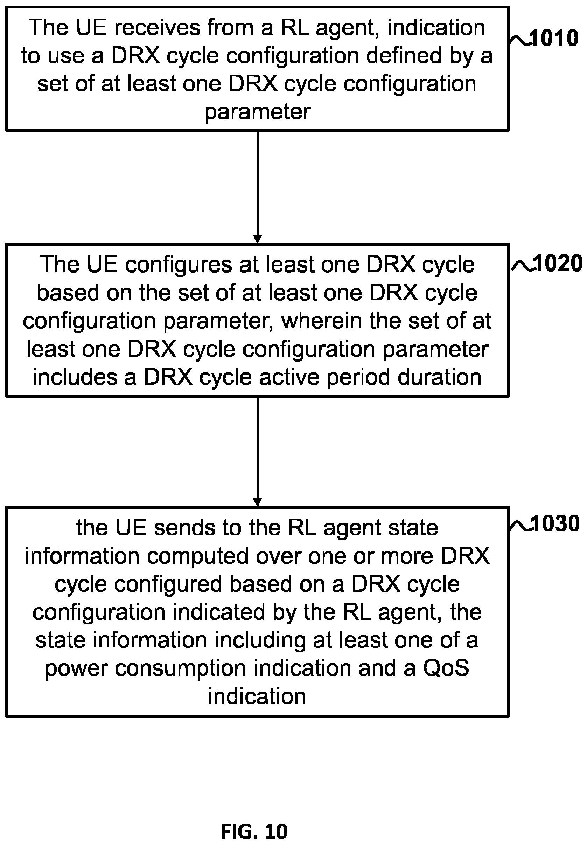

FIG. 10 shows a flowchart of a method for metrics generation according to one or more example embodiments. The steps of the method may be implemented by a UE according to any example described herein.

While the steps are described in a sequential manner, the man skilled in the art will appreciate that some steps may be omitted, combined, performed in different order and / or in parallel.

In step 1010 the UE receives from a RL agent, indication to use a Discontinuous Reception, DRX, cycle configuration, wherein the DRX cycle configuration is defined by a set of at least one DRX cycle configuration parameter.

In step 1020 the UE configures at least one DRX cycle based on the set of at least one DRX cycle configuration parameter. The set of at least one DRX cycle configuration parameter may include a DRX cycle active period duration. The set of at least one DRX cycle configuration parameter may include at least one of a start offset for the DRX cycle active period and a DRX cycle length.

In step 1030, the UE sends to the RL agent state information computed over one or more DRX cycle. The one or more DRX cycles are configured based on a DRX cycle configuration indicated by the RL agent. The state information may include at least one of a power consumption indication and a QoS indication.

A base station (eNB, base station (e.g. gNB), base station (e.g. gNB)-DU, base station (e.g. gNB)-CU, etc) may be any computing device configured to perform some control over radio resources of the communication system it is coupled to. The base station may also be referred to as an access point or any other type of interfacing device including a relay station capable of operating in a wireless environment. The base station may include or be coupled to transceivers. From the transceivers of the base station, a connection may be provided to an antenna unit that establishes bi-directional radio links to user devices. The antenna unit may comprise a plurality of antennas or antenna elements. The base station may further be connected to core network, CN. Depending on the system, the counterpart on the CN side may be a serving gateway (S-GW, routing and forwarding user data packets), packet data network gateway (P-GW), for providing connectivity of user devices (UEs) to external packet data networks, or mobile management entity (MME), etc

A user equipment, UE, (or user terminal, user device) may refer to a portable computing device that includes wireless mobile communication circuitry operating with or without a subscriber identification module (SIM), including, but not limited to, the following types of devices: a mobile station (MS), a mobile phone, a radio cell phone, a smartphone, a personal digital assistant (PDA), a handset, an application specific device using a wireless modem (alarm or measurement device, etc.), a laptop and/or touch screen computer, a tablet, a phablet, a game console, a notebook, and a multimedia device, as examples.

A UE may be a device having capability to operate in Internet of Things (IoT) network with the ability to transfer data over a network without requiring human-to-human or human-to-computer interaction. The user device may rely or use cloud computing technology.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently or simultaneously. Also some steps may be omitted, combined or performed in different order. A process may be terminated when its steps are completed but may also have additional steps not disclosed in the figure or description. A process may correspond to a method, function, procedure, subroutine, subprogram, etc. When a process corresponds to a function, its termination may correspond to a return of the function to the calling function or the main function.

Each process, function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc.

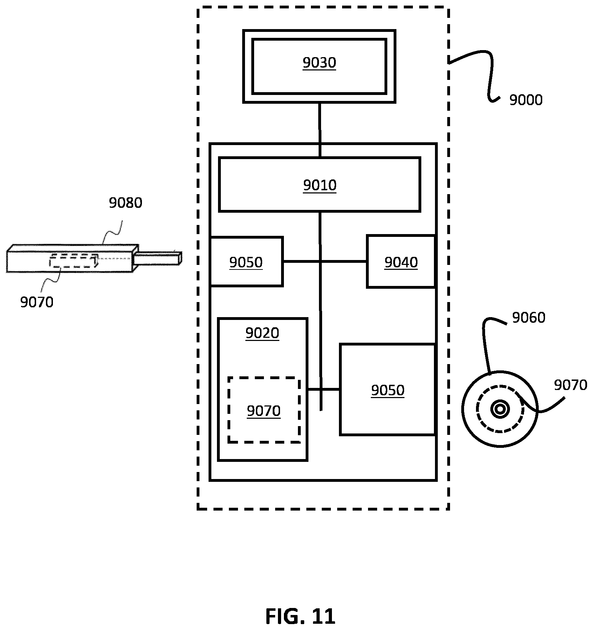

FIG. 11 illustrates an example embodiment of an apparatus 9000. The apparatus 9000 may be a host device, or be part of a host device or host system as disclosed herein. The apparatus 9000 may be used for performing one or more or all steps of a method disclosed herein. The apparatus 9000 may be used for implementing one or more functions of a UE or a network entity (e.g. a base station) including a RL agent disclosed herein.

As represented schematically by FIG. 11, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

LIST OF MAIN ABBREVIATIONS

| | |
|---|---|
| CDRX | Connected mode DRX |
| DL | Downlink |
| DRX | Discontinuous Reception |
| FPS | Frame Per Second |
| gNB | 5th generation Node B |
| GOP | Group Of Pictures |
| IE | Information Element |
| KPI | Key Performance Indication |
| MAC | Medium Access Control |
| ML | Machine Learning |
| NN | Neural Network |
| NG-RAN | Next Generation Radio Access Networks |
| PDB | Packet Delay Budget |
| PDCCH | Physical Downlink Control CHannel |
| PDSCH | Physical Downlink Shared CHannel |
| PDU | Protocol Data Units |
| QL | Q-learning |
| QoS | Quality of Service |
| RAN | Radio Access Network |
| RL | Reinforcement Learning |
| RRC | Radio Resource Control |
| UE | User Equipment |
| UL | Uplink |
| XR | extended Reality |

**Claims**

1. A method comprising:
   performing a Reinforcement Learning, RL, process to configure at least one Discontinuous Reception, DRX, cycle for a User Equipment, UE; wherein performing the RL process comprises:

   selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration;
   sending to the UE indication to use the DRX cycle configuration corresponding to the selected action;
   receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication;
   computing, by the RL agent, a reward based on the state information;
   updating a policy for selecting an action in the action space based on the reward.

2. The method according to claim 1, wherein at least one set of at least one DRX cycle configuration parameter corresponding to an action in the action space includes at least one of a start offset for the DRX cycle active period and a DRX cycle length.

3. The method according to claim 1 or 2, wherein the power consumption indication represents a power consumption level determined over the at least one DRX cycle.

4. The method according to any one of claims 1 to 3, wherein the QoS indication is computed based on Extended Reality, XR, frames received over the at least one DRX cycle.

5. The method according to claim 4, wherein the QoS indication is computed based on a ratio of a number of Packet Data Units received within a packet delay budget.

6. The method according to any one of the preceding claims, wherein the reward is computed as a function of at least one of a QoS satisfaction based on the QoS indication and a power consumption penalty based on the power consumption indication.

7. The method according to any one of the preceding claims, wherein the reward is computed as a weighted sum of rewards computed respectively for different types of XR frames received by the UE.

8. The method according to any one of the preceding claims, wherein the power consumption indication is or is converted to a power consumption level coded on n bits, where n is equal or greater than 1, the method comprising determining a state in a state space based on the power consumption level.

9. The method according to any one of the preceding claims, wherein the QoS indication is or is converted to a QoS level coded on n bits, where n is equal or greater than 1, the method comprising determining a state in a state space based on the QoS level.

10. The method according to any one of the preceding claims, comprising
performing signalling with the UE to agree on at least one of a state space for the state information and an action space.

11. The method according to claims 8 or 9, comprising
performing signalling with the UE to agree on at least one threshold to be used for computing the power consumption level or respectively the QoS level.

12. An apparatus comprising processing circuitry for:
performing a Reinforcement Learning, RL, process to configure at least one Discontinuous Reception, DRX, cycle for a User Equipment, UE; wherein performing the RL process comprises:

selecting, by the RL agent, an action in an action space, wherein each action in the action space corresponds to a DRX cycle configuration defined by a set of at least one DRX cycle configuration parameter, wherein each set of at least one DRX cycle configuration parameter corresponding to an action in the action space includes a DRX cycle active period duration;
sending to the UE indication to use the DRX cycle configuration corresponding to the selected action;
receiving, by the RL agent from the UE, state information computed over at least one DRX cycle, each of the at least one DRX cycle being configured based on a DRX cycle configuration indicated by the RL agent, the state information including at least one of a power consumption indication and a Quality of Service, QoS, indication;
computing, by the RL agent, a reward based on the state information;
updating a policy for selecting an action in the action space based on the reward.

13. A method comprising:

receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter;
configuring at least one DRX cycle based on the set of at least one DRX cycle configuration parameter, wherein the set of at least one DRX cycle configuration parameter includes a DRX cycle active period duration;
sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication.

14. The method according to claim 13, wherein the set of at least one DRX cycle configuration parameter includes at least one of a start offset for the DRX cycle active period and a DRX cycle length.

15. An apparatus comprising processing circuitry for:

receiving, by a User Equipment from a Reinforcement Learning, RL, agent, indication to use a Discontinuous Reception, DRX, cycle configuration, wherein the DRX cycle configuration is defined by a set of at least one DRX cycle configuration parameter;
configuring at least one DRX cycle based on the set of at least one DRX cycle configuration parameter, wherein the set of at least one DRX cycle configuration parameter includes a DRX cycle active period duration;
sending, by the UE to the RL agent, state information computed over at least one DRX cycle, wherein each of the at least one DRX cycle is configured based on a DRX cycle configuration indicated by the RL agent, the state information including at least one of a power consumption indication and a QoS indication.

I-frame

FIG. 1

FIG. 2

**Power consumption fractions**

FIG. 3

gNB sends (e.g. by RRC signalling) parameters of a RL algorithm for DRX cycle configuration to the UE — 410

gNB (RL agent) initializes the state space, action space and reward function — 420

gNB (RL agent) selects an action corresponding to a DRX cycle configuration and sends it to the UE — 430

UE receives the action corresponding to a DRX cycle configuration and applies it for a current learning period — 440

UE and / or gNB evaluate pre-defined KPIs and generate a QoS indication and / or power consumption indication — 450

UE sends a QoS indication and / or power consumption indication to the gNB — 460

gNB (RL agent) calculates the reward based on the QoS indication and / or power consumption indication — 470

**FIG. 4**

frame arrival t-1          frame arrival t          frame arrival t+1

Packed Delay Budget (10ms)          Postpone tx

12  16  20  24  28  32  36  40  44  48  52  56  60

ON    OFF    ON    OFF    ON    OFF

**FIG. 5**

Start the RL-algorithm — **601**

Initialize the hyperparameters ; Initialize the state space, action space, reward function and Q-value table — **602**

Run the RL algorithm for DRX cycle configuration in exploration mode (e.g. with high exploration probability) — **603**

**NO**

Warlm-up condition met ? — **604**

**YES**

Run the RL algorithm for DRX cycle configuration in exploitation mode (e.g. with low exploration probability) — **605**

**FIG. 6**

RL agent determines the action corresponding to a DRX cycle configuration **701**

Start next RL iteration **707**

interaction between the environment, the UE and/or the RL agent to generate QoS satisfaction indication and/ or power consumption indication **702**

| **702a** |
| :---: |
| **702b** |
| **702c** |

State transition: the RL agent determines a new state based on QoS satisfaction indication and/ or power consumption indication **706**

**703** Time for next RL iteration ?

**NO**

**YES**

RL agent compute the reward **704**

RL agent update the Q-table **705**

**FIG. 7**

FIG. 8

Performing signalling with a UE to agree on at least one of a state space for the state information and an action space for a RL process ~900

Performing signalling with the UE to agree on at least one threshold to be used for computing a power consumption level and a QoS level ~910

A RL process is performed to configure at least one Discontinuous Reception, DRX, cycle for the UE ~920

921

922

923

924

925

**FIG. 9**

The UE receives from a RL agent, indication to use a DRX cycle configuration defined by a set of at least one DRX cycle configuration parameter ∿1010

The UE configures at least one DRX cycle based on the set of at least one DRX cycle configuration parameter, wherein the set of at least one DRX cycle configuration parameter includes a DRX cycle active period duration ∿1020

the UE sends to the RL agent state information computed over one or more DRX cycle configured based on a DRX cycle configuration indicated by the RL agent, the state information including at least one of a power consumption indication and a QoS indication ∿1030

**FIG. 10**

**FIG. 11**

Europäisches
Patentamt

European
Patent Office

Office européen
des brevets

# EUROPEAN SEARCH REPORT

Application Number

EP 23 20 3400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUTIBA KARIM ET AL: "On using Deep Reinforcement Learning to balance Power Consumption and Latency in 5G NR", ICC 2023 – IEEE INTERNATIONAL CONFERENCE ON COMMUNICATIONS, IEEE, 28 May 2023 (2023-05-28), pages 6218-6223, XP034452420, DOI: 10.1109/ICC45041.2023.10279727 [retrieved on 2023-10-23] * the whole document * | 1-15 | INV. H04W52/02 G06N3/00 G06N3/044 |
| A | PARIS STEFANO ET AL: "Adaptive Discontinuous Reception in 5G Advanced for Extended Reality Applications", 2022 IEEE 95TH VEHICULAR TECHNOLOGY CONFERENCE: (VTC2022-SPRING), IEEE, 19 June 2022 (2022-06-19), pages 1-6, XP034175809, DOI: 10.1109/VTC2022-SPRING54318.2022.9860663 [retrieved on 2022-08-25] * the whole document * | 1-15 | |
| A | ZHOU JIANHONG ET AL: "Online Learning-Based Discontinuous Reception (DRX) for Machine-Type Communications", IEEE INTERNET OF THINGS JOURNAL, IEEE, USA, vol. 6, no. 3, 1 June 2019 (2019-06-01), pages 5550-5561, XP011731327, DOI: 10.1109/JIOT.2019.2903347 [retrieved on 2019-06-17] * the whole document * | 1-15 | TECHNICAL FIELDS SEARCHED (IPC) H04W G06N |

-/--

The present search report has been drawn up for all claims

| Place of search | Date of completion of the search | Examiner |
|---|---|---|
| Munich | 7 March 2024 | Avilés Martínez, L |

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 20 3400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/199669 A1 (VANNITHAMBY RATH [US] ET AL) 22 June 2023 (2023-06-22)<br>* paragraph [0219] – paragraph [0226] *<br>* paragraph [0003] *<br>* figures 5-22 *<br>* page 108 – page 115 * | 1-15 | |

TECHNICAL FIELDS
SEARCHED      (IPC)

The present search report has been drawn up for all claims

| Place of search | Date of completion of the search | Examiner |
|---|---|---|
| Munich | 7 March 2024 | Avilés Martínez, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                            

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 20 3400**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-03-2024**

| Patent document cited in search report | Publication date | Patent family member(s) | Publication date |
|---|---|---|---|
| US 2023199669 A1 | 22-06-2023 | US 2023199669 A1<br>WO 2023122382 A1 | 22-06-2023<br>29-06-2023 |

For more details about this annex : see Official Journal of the European Patent Office, No. 12/82